# EUROPÄISCHE PATENTSCHRIFT

(11) **EP 0 803 140 B1**
(45) Veröffentlichungstag und Bekanntmachung des Hinweises auf die Patenterteilung: **07.07.1999**
(21) Anmeldenummer: 96900282.3
(22) Anmeldetag: 09.01.1996
(51) Int. Cl.: H02B 11/24

(54) **EINSCHUBRAHMEN MIT EINER TRENNKONTAKTANORDNUNG**
SLIDING FRAME WITH A BREAK CONTACT ARRANGEMENT
CADRE DE RACK A SYSTEME DE CONTACTS DE COUPURE

(30) Priorität: 10.01.1995 DE 19501928
(43) Veröffentlichungstag der Anmeldung: 29.10.1997
(73) Patentinhaber: SIEMENS AKTIENGESELLSCHAFT, 80333 München (DE)
(72) Erfinder: AHLERT, Torsten, D-15517 Fürstenwalde (DE); DEYLITZ, Erhard, D-10405 Berlin (DE)
(86) Internationale Anmeldenummer: DE9600061
(87) Internationale Veröffentlichungsnummer: WO9621960

(56) Entgegenhaltungen:
- EP-A- 0 577 111
- DE-A- 3 544 667
- US-A- 4 183 073

## Beschreibung

Die Erfindung betrifft einen Einschubrahmen für ein verfahrbar angeordnetes Schaltgerät mit einer Trennkontaktanordnung und einer durch eine Fahrbewegung des Schaltgerätes betätigbaren Schutzeinrichtung gegen Berühren spannungführender Teile der Trennkontaktanordnung, wobei die Schutzeinrichtung eine von dem Schaltgerät zu beaufschlagende Hebelanordnung sowie eine durch die Hebelanordnung verschiebbare isolierende Schutzplatte aufweist.

Ein Einschubrahmen der genannten Art ist durch die DE-A-35 44 667 bzw. die EP-A-0 577 111 bekannt geworden. In beiden bekannten Anordnungen ist dafür gesorgt, daß die Schutzplatte im Verlauf eines nur relativ kurzen Fahrweges des Schaltgerätes betätigt wird und das Schaltgerät anschließend ohne weitere Bewegung der Schutzplatte in Eingriff mit der Trennkontaktanordnung gebracht werden kann. Dies wird bei der einen der bekannten Anordnungen durch Hebelanordnungen erreicht, die an den Seitenwänden des Einschubrahmens angeordnet sind, während bei der anderen der bekannten Anordnungen sinngemäß wirkende Hebelbaugruppen in der Rückwand des Einschubrahmens untergebracht sind, in der sich mit dem Schaltgeräte zusammenwirkende Trennkontaktblöcke befinden.

Der Erfindung liegt die Aufgabe zugrunde, eine besonders raumsparende Bauform der mit den Schutzplatten zusammenwirkenden Hebelanordnung zu schaffen. Dies beruht darauf, daß bei der einen der bekannten Anordnungen die Seitenwände des Einschubrahmens als Träger von Betätigungselementen der Schutzplatten belegt werden, während bei der anderen der bekannten Anordnungen zwar die Seitenwände des Einschubrahmens von derartigen Elementen freigehalten sind, jedoch die Betätigungselemente eine störend große Bautiefe aufweisen.

Gemäß der Erfindung wird die gestellte Aufgabe durch folgende Merkmale gelöst:
- die Hebelanordnung umfaßt zwei miteinander gelenkig verbundene Hebel, von denen der eine als Kulissenhebel ausgebildet ist und eine Kulissenöffnung zum Eingreifen eines Führungszapfens des anderen Hebels besitzt, der als von dem Schaltgerät zu beaufschlagender Steuerhebel ausgebildet ist,
- der Kulissenhebel ist um ein an dem Einschubrahmen angebrachtes Schwenklager bewegbar und trägt an seinem dem Schwenklager gegenüberliegenden Ende einen Schwenkarm für die Schutzplatte,
- der Steuerhebel ist durch eine Rückstellfeder gegenüber dem Kulissenhebel derart vorgespannt, daß der Führungszapfen des Steuerhebels im Ruhezustand und während des Öffnens der Schutzplatte nahe dem Schwenklager des Kulissenhebels steht und der Steuerhebel mit seinem Führungszapfen nach einer Betätigung der Schutzplatte ohne weitere Schwenkung des Kulissenhebels entgegen der Wirkung der Rückstellfeder entlang der Kulissenöffnung verschiebbar ist.

Die Anordnung nach der Erfindung ist mit einer vergleichsweise geringen Bautiefe ausführbar, weil der Steuerhebel der geradlinigen Verschiebung des Schaltgerätes nur teilweise zu folgen braucht und dann entlang der Kulissenöffnung im wesentlichen quer zur Fahrbewegung des Schaltgerätes ausweichen kann.

In Mittelspannungs-Schaltanlagen mit Fahrwagen- oder Einschub-Leistungschaltern ist es bereits bekannt (DE 35 42 979 A1), eine ortsfeste Kulisse als Mittel zur Verschiebung des Leistungsschalters zu benutzen. Eine Schutzplatte wird durch ein Hebelgestänge betätigt, das einen nahe der Kulisse gelagerten Steuerhebel aufweist. Dieser Steuerhebel wird durch einen in die Kulisse eingreifenden Kurbelzapfen des Fahrantriebes des Fahrwagens oder Einschubes betätigt. Bei dieser Anordnung wird somit die Schutzplatte nicht direkt durch die Fahrbewegung des Leistungsschalters angetrieben, wie dies bei den eingangs erwähnten bekannten Anordnungen der Fall ist, von denen die Erfindung ausgeht. Auch gehört die Kulisse nicht zu dem Hebelgestänge, das die Schutzplatte betätigt, sondern zu dem Fahrantrieb. Daher fehlte eine Anregung, bei einem durch eine Fahrbewegung direkt betätigten Antrieb einer Schutzplatte einen Steuerhebel in Verbindung mit einer Kulisse solcher Gestaltung vorzusehen, daß trotz Mitnahme eines Steuerhebels über den gesamten Fahrweg des Leistungsschalters die Bautiefe der Hebelanordnung wesentlich geringer ist.

Insbesondere in Schaltanlagen mit Niederspannungs-Leistungsschaltern ist es mit Rücksicht auf die relativ kurzen Fahrwege zwischen der Teststellung und der Betriebsstellung erwünscht, daß ein kurzer Abschnitt des Fahrweges zur Betätigung der Schutzplatten ausreicht. Hierzu kann dadurch beigetragen werden, daß die erwähnte Kulissenöffnung relativ zu dem Schwenklager des Kulissenhebels und zu dem Steuerhebel derart angeordnet ist, daß im Ruhezustand durch den Führungszapfen des Steuerhebels eine auf das Schwenklager des Kulissenhebels gerichtete Kraft ausgeübt wird, während nach dem Ausschwenken der Kulissenhebel eine von dem Schwenklager fortweisende Kraft auftritt.

Ferner ist das erwünschte Verhalten der Hebelanordnung dadurch vorteilhaft zu beeinflussen, daß die Kulissenöffnung zwei winklig zueinander stehende Abschnitte aufweist, von denen der erste, dem Schwenklager benachbarte Abschnitt relativ kurz bemessen ist und eine Richtung aufweist, die bei betätigtem Kulissenhebel eine von dem Schwenklager fortweisende Kraftwirkung auf den Führungszapfen des Steuerhebels ergibt.

Dies hat zur Folge, daß in einem ersten Abschnitt der Bewegung ein hohes Übersetzungsverhältnis zwischen dem Steuerhebel und Kulissenhebel besteht. In einem zweiten Abschnitt der Bewegung gleitet der Steuerhebel in der Kulissenöffnung des bereits in der Endstellung angelangten Kulissenhebels.

Die durch die Erfindung ermöglichte geringe Bautiefe der zur Betätigung der Schutzplatte vorgesehenen Hebelanordnung führt zu einer ausgeprägten Relativbewegung zwischen dem Schwenkarm des Kulissenhebels und der Schutzplatte. Ein reibungsarmes Zusammenwirken kann jedoch dadurch gefördert werden, daß der Schwenkarm des Kulissenhebels eine bogenförmige Kontur zwecks reibungsarmen Eingreifens in eine Transportöffnung der Schutzplatte besitzt.

Im Prinzip ist es möglich, mit einer Anordnung je eines Kulissenhebels und eines Steuerhebels beidseitig der Trennkontakte eine für alle Trennkontakte eines Schaltgerätes vorgesehene Schutzplatte zu betätigen. Sind jedoch für die ankommenden und abgehenden Anschlüsse eines Leistungsschalters getrennte Schutzplatten vorgesehen, so kann deren Betätigung nach einer Weiterbildung der Erfindung in vorteilhafter Weise dadurch geschehen, daß zur gleichzeitigen gegenläufigen Bewegung von zwei Schutzplatten zwei spiegelbildlich derart angeordnete Kulissenhebel vorgesehen sind, daß deren Schwenklager nahe beieinanderliegen, und daß gleichfalls in spiegelbildlicher Anordnung zwei Steuerhebel vorgesehen sind, deren den Führungszapfen gegenüberliegende Enden durch einen Gelenkzapfen miteinander verbunden sind, wobei das Schaltgerät mittels des Gelenkzapfens auf beide Steuerhebel einwirkt.

Um bei der Bedienung einer Schaltanlage die Berührungssicherheit zu gewährleisten, ist es bekannt, die Betätigungseinrichtungen von Schutzplatten mit einer Abschließvorrichtung auszustatten. Dabei ist es erwünscht, die durch ein Vorhängeschloß zu bewirkende Sperrung der Schutzplatten an einer gut zugänglichen Stelle vornehmen zu können. Nach einer Ausgestaltung der Erfindung kann dies dadurch erreicht werden, daß die Kulissenhebel je einen Ausleger besitzen und daß sich die Ausleger im Ruhezustand einander unter Freilassung eines Zwischenraumes scherenartig derart überkreuzen, daß eine abschließbare Sperrnase einfügbar ist. Vorzugsweise kann diese Sperrnase an einer an dem Einschubrahmen ausziehbar angeordneten Fahrschiene für das Schaltgerät angebracht sein. Da die Fahrschiene bis zur Vorderkante des Einschubrahmens reicht, besteht hier die Gelegenheit zum Anbringen des Vorhängeschlosses.

Der Aufwand für die Herstellung der beschriebenen Hebelanordnung kann dadurch erheblich verringert werden, daß die beiden Kulissenhebel gleich ausgebildet und um 180° gedreht montierbar sind, wobei das Schwenklager durch beidseitig abragende Zapfen der Kulissenhebel und durch entsprechende halbschalenartige Lagerpfannen am Einschubrahmen gebildet sind. Ferner kann die Montage der Teile dadurch erleichtert werden, daß die Zapfen jedes Kulissenhebels an einer einstückig mit dem Kulissenhebel ausgebildeten, jedoch diesem gegenüber federnd auslenkbaren Zunge angeordnet sind und daß am Einschubrahmen die Lagerpfannen derart angeordnet sind, daß beide Zapfen an gegenüberliegenden Seiten erfaßt werden.

Der durch die Verwendung von zwei gleichen, jedoch um 180° gedreht angeordneten Kulissenhebeln entstehende Zwischenraum kann in vorteilhafter Weise zur Unterbringung von Federn genutzt werden. Im Rahmen der Erfindung kann hierzu als Rückstellfeder eine die beiden Steuerhebel gegeneinander vorspannende Schrauben-Zugfeder ausgebildet sein und die Kulissenhebel können durch eine weitere Schrauben-Zugfeder gegeneinander in die Ruhelage vorgespannt sein, wobei beide Zugfedern etwa parallel zueinander angeordnet sind. Diese Anordnung wirkt in der Weise, daß die zwischen den Kulissenhebeln ausgespannte Feder im wesentlichen nur während der Betätigung der Schutzplatten und bei der anschließenden Weiterbewegung der Steuerhebel nur die zwischen diesen ausgespannte Feder gedehnt wird.

Die Erfindung wird im folgenden anhand des in den Figuren dargestellten Ausführungsbeispieles näher erläutert.

Die Figur 1 zeigt eine Seitenansicht eines Einschubrahmens mit abgenommener Seitenwand.

Die Figuren 2 und 3 zeigen einen Steuerhebel in einer Ansicht und im Profil.

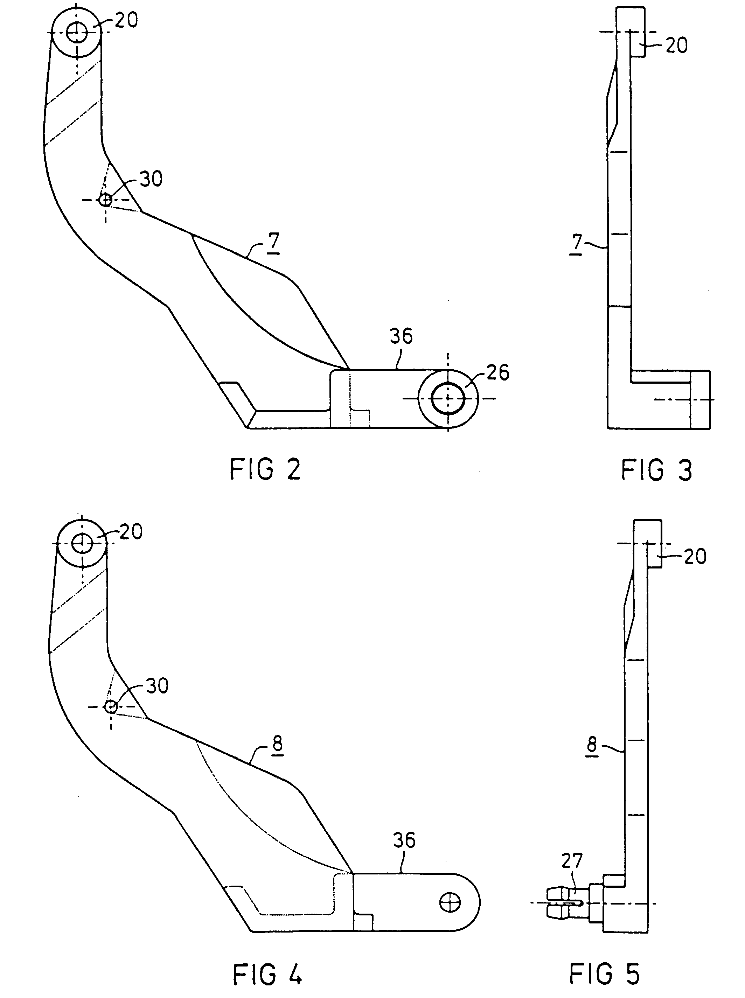

Ein mit dem Steuerhebel gemäß den Figuren 2 und 3 zusammenwirkender weiterer Steuerhebel ist in den Figuren 4 und 5 gezeigt.

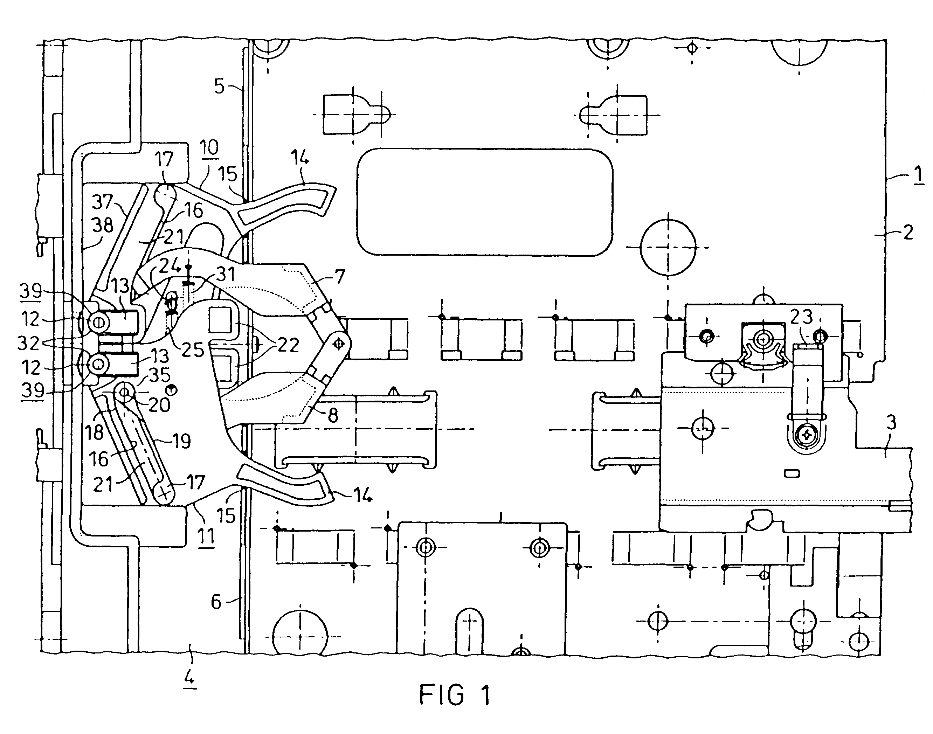

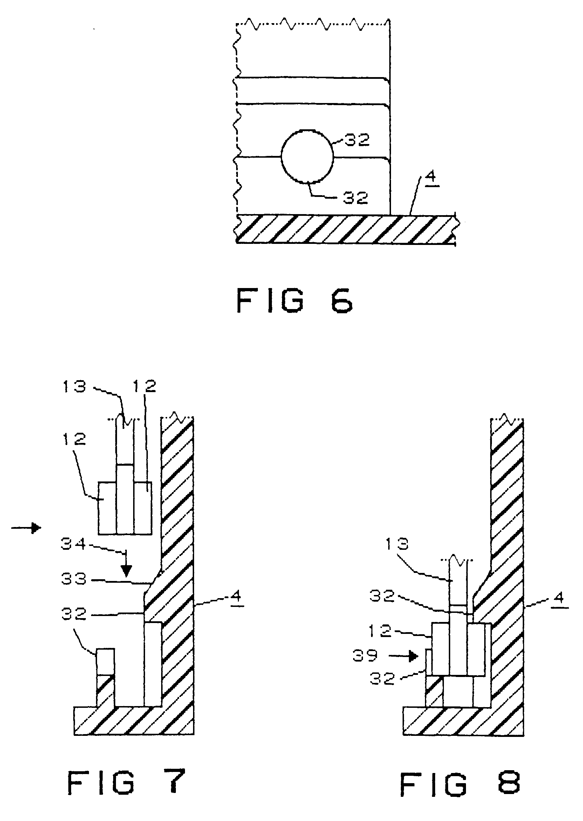

Einzelheiten einer Lageranordnung für einen Kulissenhebel gemäß den Figuren 1, 2 und 3 zeigen die Figuren 6, 7 und 8.

In der Figur 1 ist ein Einschubrahmen 1 mit abgenommener Seitenwand so dargestellt, daß sich die zum Einführen eines Niederspannungs-Leistungsschalters vorgesehene Öffnung an der rechten Seite der Figur 1 befindet. An der sichtbaren hinteren Seitenwand 2 ist eine ausziehbare Fahrschiene 3 zum Aufsetzen eines nicht gezeigten Leistungsschalters angebracht. Im linken Teil der Figur 1 ist ein aus Isolierstoff bestehender Träger 4 gezeigt, an dem Schutzplatten 5 und 6 als Abschluß der nicht gezeigten Trennkontaktblöcke geführt sind. Die Schutzplatten 5 und 6 sind durch Steuerhebel 7 und 8 sowie Kulissenhebel 10 und 11 betätigbar.

Mit Rücksicht auf die Breite des Einschubrahmens 1 sind zwei Anordnungen von Steuerhebeln 7, 8 und Kulissenhebeln 10, 11 vorgesehen, wobei die in der Figur 1 gezeigten Hebel unterhalb der in der Figur 1 fortgelassenen Seitenwand des Einschubrahmens gelegen sind und deckungsgleich mit gleichen Hebeln ausgebildet sind, die sich in der Nähe der Seitenwand 2 befinden. Hinsichtlich der allgemeinen Zuordnung eines Leistungsschalters zu einem Einschubrahmen und Trennkontakten wird auf die Figur 1 der eingangs genannten DE-A-35 44 667 verwiesen.

Bevor näher auf das Zusammenwirken der Steuerhebel 7, 8 und Kulissenhebel 10, 11 eingegangen wird, sei zunächst gleichfalls anhand der Figur 1 die Gestaltung der Kulissenhebel 10 und 11 erläutert. Die Kulissenhebel 10 und 11 sind identisch und können aufgrund ihrer Formgebung in der einen Stellung (Figur 1 oben)oder in einer um 180° gedrehten Stellung (Figur 1 unten) verwendet werden. Die beispielsweise aus einem faserverstärkten Kunststoff hergestellten Kulissenhebel 10, 11 weisen zur schwenkbaren Lagerung als Bestandteil eines Schwenklagers 39 einen Zapfen 12 auf, der an einer einstückig mit dem Hebelkörper ausgebildeten, elastisch biegsamen Zunge 13 angeordnet ist. Ein Schwenkarm 14 besitzt eine bogenförmige Kontur mit veränderlicher Breite zum Eingreifen in eine Transportöffnung 15 der Schutzplatte 5 bzw. 6. Nahe dem Zapfen 12 des Kulissenhebels 10 bzw. 11 endet eine Kulissenöffnung 16, an deren einem Ende eine Eingrifföffnung 17 für einen Führungszapfen 20 eines der Steuerhebel 7, 8 vorgesehen ist (Figuren 2 und 3 bzw. 4 und 5). Ein Wandteil 21 des Kulissenhebels 10, 11 verläuft parallel zu der Kulissenöffnung 16 derart, daß der Steuerhebel 7, 8 nach dem Einführen seines Führungszapfens 20 in die Eingriffsöffnung 17 im Eingriff mit dem Kulissenhebel 10, 11 gehalten wird.

Die Kulissenöffnung 16 der Kulissenhebel 10 und 11 weist zwei winklig zueinander stehende Abschnitte 18 und 19 auf. Der Abschnitt 18 ist relativ kurz und schließt sich an einen Endbereich 35 der Kulissenöffnung 16 an, der nahe dem Zapfen 12 gelegen ist. Der längere Abschnitt 19 erstreckt sich bis zu der Eingrifföffnung 17. Die relative Winkelstellung der Abschnitte 18 und 19 ist so bemessen, daß eine den Führungszapfen von dem Endbereich 35 entfernende Kraft auftritt, wenn die Kulissenhebel 10 und 11 in der betätigten Endstellung angelangt sind.

Weitere in der Figur 1 gezeigte Merkmale des Kulissenhebels 10, 11 sind Ausleger 22, die sich in der Grundstellung der Kulissenhebel 10, 11 gemäß der Figur 1 mit geringem Abstand derart gegenüber stehen, daß eine an der Fahrschiene 3 angebrachte Sperrnase 23 zwischen die beiden Ausleger 22 einführbar ist. Wird die Fahrschiene 3 dann gegen Verschiebung beispielsweise durch ein Vorhängeschloß gesichert, so können die Kulissenhebel 10 und 11 nicht geschwenkt und damit die Schutzplatten 5 und 6 nicht geöffnet werden. Ferner sind die Kulissenhebel 10 und 11 mit einer Nase 24 zum Einhängen einer Schraubenzugfeder versehen. Durch eine solche, in der Figur 1 gezeigte Zugfeder 25 werden die Kulissenhebel 10 und 11 derart gegeneinander vorgespannt, daß die Schutzplatten 5 und 6 ihre die Trennkontakte verschließende Ruhestellung einnehmen.

Die Steuerhebel 7 und 8 sind unterschiedlich ausgebildet, wie bei einem Vergleich der Figuren 2 und 3 sowie 4 und 5 zu ersehen ist. Wie man erkennt, besitzt der Steuerhebel 7 (Figuren 2 und 3) an seinem dem Führungszapfen 20 gegenüberliegenden Ende eine Endbuchse 26, die zum Eingriff eines Rastzapfens 27 an dem entsprechenden Ende des Steuerhebels 8 (Figuren 4 und 5) vorgesehen ist. Werden der Rastzapfen 27 und die Endbuchse 26 in Eingriff gebracht, wie dies Figur 1 zeigt, so bilden diese Teile ein Gelenk, welches in den Innenraum des Einschubrahmens vorspringt und durch den in den Einschubrahmen einzusetzenden Leistungsschalter beaufschlagt wird, wenn dieser mittels einer geeigneten Antriebsvorrichtung in Richtung der Betriebsstellung verfahren wird. Je eine Öffnung 30 des Steuerhebels 7 bzw. des Steuerhebels 8 dient zum Einhängen einer weiteren Schraubenfeder, welche die Steuerhebel 7 und 8 gegeneinander vorspannt. Eine solche Schraubenfeder 31 ist in der Figur 1 gezeigt. Dabei ist zugleich erkennbar, daß die Schraubenfeder 31 etwa parallel zu der Schraubenfeder 25 in dem Zwischenraum zwischen den Kulissenhebeln 10 und 11 angeordnet sind.

Zur Aufnahme der Kulissenhebel 10 und 11 ist der Träger 4 mit halbschalenartigen Lagerpfannen 32 für die Zapfen 12 versehen, die gleichfalls zu dem Schwenklager 39 gehören. Wie näher den Figuren 6, 7 und 8 zu entnehmen ist, die den Träger 4 im Bereich des Schwenklagers 39 eines der Kulissenhebel 10 bzw. 11 zeigen, sind die halbschalenartigen Lagerpfannen 32 dieses einen Schwenklagers 39 mit einem gegenseitigen Abstand angeordnet, der etwa der Dicke der Zunge 13 entspricht. Dabei sind die beiden Lagerpfannen 32 gegeneinander um 180° versetzt. Ferner ist eine Schrägfläche 33 in solcher Anordnung vorgesehen, daß die Zunge 13 bei der Montage des betreffenden Kulissenhebels in der Richtung des in der Figur 7 gezeigten Pfeiles 34 quer zur Richtung des Pfeiles 33 ausgelenkt wird. Dies gestattet die Anbringung der Kulissenhebel an dem Träger 4 nach Art einer Rastverbindung. Im montierten Zustand, wie ihn die Figur 8 zeigt, erfaßt die linke Lagerpfanne 32 den linken Zapfen 12 von unten, während die rechte Lagerpfanne 32 den rechten Zapfen 12 von oben erfaßt. Durch die Schrauben-zugfeder 31 werden die Steuerhebel 7 und 8 mit ihren Führungszapfen 20 an einem Endbereich 35 der Kulissenöffnung 17 zur Anlage gebracht, der sich nahe den Zapfen 12 befindet (Figur 1). Daher wird auf die Kulissenhebel 10, 11 ein starkes Übersetzungsverhältnis ausgeübt, wenn das durch die Endbuchse 26 und den Rastzapfen 27 gebildete Gelenk der Steuerhebel 7 und 8 in der erwähnten Weise durch einen Leistungsschalter beaufschlagt wird. Dementsprechend werden die Schwenkarme 14 der Kulissenhebel 10, 11 zur Verschiebung der Schutzplatten 5 und 6 rasch verschoben. Obwohl diese Schutzplatten in bekannter Weise aus einem dünnen plattenförmigen Material bestehen können, erfolgt die Verschiebung verhältnismäßig reibungsarm, weil die Kontur der Schwenkarme 14 dem Schwenkwinkel angepaßt geformt ist. Gegen Ende der Schwenkbewegung der Kulissenhebel 10 und 11 stehen die Schwenkarme 14 nur wenig über die Schutzplatten 5 und 6 über, so daß sie nicht in den zur Aufnahme des Leistungsschalters vorgesehenen Raum hineinragen. Die Führungszapfen 20 der Steuerhebel 7 und 8 bleiben während des beschriebenen Vorganges in dem erwähnten Endbereich 35 der Kulissenöffnungen 16. Sind jedoch die Kulissenhebel 10 und 11 in der Endstellung angelangt, in welcher sich die Kulissenhebel 10, 11 mit ihrer Unterseite 37 an eine Gegenfläche 38 am Träger 4 anlegen, so wirkt die mittels der Führungszapfen 20 ausgeübte Kraft nicht mehr in Richtung des jeweils zugehörigen Endbereiches 35 nahe dem Schwenklager 39, sondern von diesen fort in Richtung der Eingrifföffnung 17 am gegenüberliegenden Ende der Kulissenöffnung 16. Hierzu trägt die schon erwähnte leichte Abwinklung der Abschnitte 18 und 19 der Kulissenöffnung 16 nahe dem Zapfen 12 bei. Bei weiterer Beaufschlagung der Steuerhebel 7 und 8 lösen sich daher nun die Führungszapfen 20 von dem Endbereich 35 und wandern in dem Abschnitt 19 der Kulissenöffnung 16 bis zum entgegengesetzten Ende. Dabei verringert sich der Abstand des durch die Endbuchse 26 und den Rastzapfen 27 gebildeten Gelenkes zu dem Träger 4, entsprechend dem Fahrweg des erwähnten Leistungsschalters.

Obwohl in dem vorstehend beschriebenen Ausführungsbeispiel paarweise angeordnete Kulissenhebel und Steuerhebel vorgesehen sind, wäre es auch möglich, eine gemeinsame Schutzplatte für die ankommenden und abgehenden Anschlüsse eines Leistungsschalters vorzusehen und diese mit nur einem Kulissenhebel und einem Steuerhebel an jeder Seite zu betätigen. In diesem Fall wäre lediglich für eine geeignete Führung des Steuerhebels an seinem dem Leistungsschalter zugewandten Ende zu sorgen. Die beschriebene Anordnung hat jedoch den Vorteil, daß getrennte Schutzplatten für die ankommenden und die abgehenden Anschlüsse vorhanden sind und diese auch getrennt verschließbar sind. Beispielsweise kann die untere Schutzplatte 6 (Figur 1) durch Betätigung der Kulissenhebel 11 geöffnet und mittels der Sperrnase 23 gesichert werden. Hierzu ist die Breite des Auslegers 22 des Kulissenhebels 10 bzw. 11 so bemessen, daß er durch die Sperrnase 23 nur in der gezeigten Ruhestellung der Teile oder in der beschriebenen betätigten Stellung erfaßt werden kann.

Ebenso kann die obere Schutzplatte 5 in geöffneter Stellung abgeschlossen werden.

## Patentansprüche

1. Einschubrahmen (1) für ein verfahrbar angeordnetes Schaltgerät mit einer Trennkontaktanordnung und einer durch eine Fahrbewegung des Schaltgerätes betätigbaren Schutzeinrichtung gegen Berühren spannungführender Teile der Trennkontaktanordnung, wobei die Schutzeinrichtung eine von dem Schaltgerät zu beaufschlagende Hebelanordnung (7, 8; 10, 11) sowie eine durch die Hebelanordnung (7, 8; 10, 11) verschiebbare isolierende Schutzplatte (5, 6) aufweist, **gekennzeichnet durch** folgende Merkmale:
- die Hebelanordnung (7, 8; 10, 11) umfaßt zwei miteinander gelenkig verbundene Hebel, von denen der eine als Kulissenhebel (10, 11) ausgebildet ist und eine Kulissenöffnung (16) zum Eingreifen eines Führungszapfens (20) des anderen Hebels besitzt, der als von dem Schaltgerät zu beaufschlagender Steuerhebel (7, 8) ausgebildet ist,
- der Kulissenhebel (10, 11) ist um ein an dem Einschubrahmen (1) angebrachtes Schwenklager (39) bewegbar und trägt an seinem dem Schwenklager (39) gegenüberliegenden Ende einen Schwenkarm (14) für die Schutzplatte (5, 6),
- der Steuerhebel (7, 8) ist durch eine Rückstellfeder (31) gegenüber dem Kulissenhebel (10, 11) derart vorgespannt, daß der Führungszapfen (20) des Steuerhebels (7, 8) im Ruhezustand und während des Öffnens der Schutzplatte (5, 6) nahe dem Schwenklager (39) des Kulissenhebels (10, 11) steht und der Steuerhebel (7, 8) mit seinem Führungszapfen (20) nach einer Betätigung der Schutzplatte (5, 6) ohne weitere Schwenkung des Kulissenhebels (10, 11) entgegen der Wirkung der Rückstellfeder (31) entlang der Kulissenöffnung (16) verschiebbar ist.

2. Einschubrahmen nach Anspruch 1,
**dadurch gekennzeichnet,** daß die Kulissenöffnung (16) relativ zu dem Schwenklager (39) des Kulissenhebels (10, 11) und zu dem Steuerhebel (7, 8) derart angeordnet ist, daß im Ruhezustand durch den Führungszapfen (20) des Steuerhebels (7, 8) eine auf das Schwenklager (39) des Kulissenhebels gerichtete Kraft ausgeübt wird, während nach dem Ausschwenken der Kulissenhebel (10, 11) eine von dem Schwenklager (39) fortweisende Kraft auftritt.

3. Einschubrahmen nach Anspruch 2,
**dadurch gekennzeichnet,** daß die Kulissenöffnung (16) zwei winklig zueinander stehende Abschnitte (18, 19) aufweist, von denen der erste, dem Schwenklager benachbarte Abschnitt (18) relativ kurz bemessen ist und eine Richtung aufweist, die bei betätigtem Kulissenhebel (10, 11) eine von dem Schwenklager (39) fortweisende Kraftwirkung auf den Führungszapfen (20) des Steuerhebels (7, 8) ergibt.

4. Einschubrahmen nach einem der vorangehenden Ansprüche,
**dadurch gekennzeichnet,** daß der Schwenkarm (14) des Kulissenhebels (10, 11) eine bogenförmige Kontur zwecks reibungsarmen Eingreifens in eine Transportöffnung (15) der Schutzplatte (5, 6) besitzt.

5. Einschubrahmen nach einem der vorangehenden Ansprüche,
**dadurch gekennzeichnet,** daß zur gleichzeitigen gegenläufigen Bewegung von zwei Schutzplatten (5, 6) zwei spiegelbildlich derart angeordnete Kulissenhebel (10, 11) vorgesehen sind, daß deren Schwenklager (39) nahe beieinander liegen und daß gleichfalls in spiegelbildlicher Anordnung zwei Steuerhebel (7, 8) vorgesehen sind, deren den Führungszapfen (20) gegenüberliegende Enden durch einen Gelenkzapfen (27) miteinander verbunden sind, wobei das Schaltgerät mittels des Gelenkzapfens (27) auf beide Steuerhebel (7, 8) einwirkt.

6. Einschubrahmen nach Anspruch 5,
**dadurch gekennzeichnet,** daß die Kulissenhebel (10, 11) je einen Ausleger (22) besitzen und daß sich die Ausleger (22) im Ruhezustand einander unter Freilassung eines Zwischenraumes scherenartig derart überkreuzen, daß eine abschließbare Sperrnase (23) einfügbar ist.

7. Einschubrahmen nach Anspruch 6,
**dadurch gekennzeichnet,** daß die Sperrnase (23) an einer an dem Einschubrahmen (1) ausziehbar angeordneten Fahrschiene (3) für das Schaltgerät angebracht ist.

8. Einschubrahmen nach Anspruch 5 oder einem der folgenden,
**dadurch gekennzeichnet,** daß die beiden Kulissenhebel (10, 11) gleich ausgebildet und um 180° gedreht montierbar sind, wobei das Schwenklager (39) durch beidseitig abragende Zapfen (12) der Kulissenhebel (10, 11) und durch entsprechende halbschalenartige Lagerpfannen (32) am Einschubrahmen (1) gebildet ist.

9. Einschubrahmen nach Anspruch 8,
**dadurch gekennzeichnet,** daß die Zapfen (12) jedes Kulissenhebels (10, 11) an einer einstückig mit dem Kulissenhebel (10, 11) ausgebildeten, jedoch diesem gegenüber federnd auslenkbaren Zunge (13) angeordnet sind und daß am Einschubrahmen (1) die Lagerpfanne (32) derart angeordnet sind, daß beide Zapfen (12) an gegenüberliegenden Seiten erfaßt werden.

10. Einschubrahmen nach Anspruch 5 oder einem der folgenden,
**dadurch gekennzeichnet,** daß die Rückstellfeder (31) als die beiden Steuerhebel (7, 8) gegeneinander vorspannende Schrauben-Zugfeder ausgebildet ist und daß die Kulissenhebel (10, 11) durch eine weitere Schrauben-Zugfeder (25) gegeneinander in die Ruhelage vorgespannt sind, wobei beide Federn (25, 31) etwa parallel zueinander angeordnet sind.

## Claims

1. Withdrawable rack (1) for a switching device which is arranged such that it can move and has an isolating contact arrangement and a protective device which can be actuated by a travelling movement of the switching device and affords protection against touching live parts of the isolating contact arrangement, the protective device having a lever arrangement (7, 8; 10, 11), which can be acted on by the switching device, as well as an insulating protective plate (5, 6), which can be displaced by the lever arrangement (7, 8; 10, 11), characterized by the following features:
- the lever arrangement (7, 8; 10, 11) comprises two levers which are connected to one another in an articulated manner, one of which is designed as a slotted lever (10, 11) and has a slot (16) for the engagement of a guide pin (20) of the other lever, which is designed as a control lever (7, 8) which can be acted on by the switching device,
- the slotted lever (10, 11) can be moved about a pivot bearing (39) fitted on the withdrawable rack (1) and, at its end opposite to the pivot bearing (39), is provided with a pivot arm (14) for the protective plate (5, 6),
- the control lever (7, 8) is prestressed, by a restoring spring (31), with respect to the slotted lever (10, 11) in such a way that the guide pin (20) of the control lever (7, 8) is situated near to the pivot bearing (39) of the slotted lever (10, 11) in the quiescent state and during opening of the protective plate (5, 6), and the control lever (7, 8), together with its guide pin (20), can be displaced, after an actuation of the protective plate (5, 6), along the slot (16) counter to the action of the restoring spring (31), without any further pivoting of the slotted lever (10, 11).

2. Withdrawable rack according to Claim 1, characterized in that the slot (16) is arranged relative to the pivot bearing (39) of the slotted lever (10, 11) and relative to the control lever (7, 8) in such a way that, in the quiescent state, a force directed at the pivot bearing (39) of the slotted lever is exerted by the guide pin (20) of the control lever (7, 8), whereas a force emanating from the pivot bearing (39) occurs after the slotted lever (10, 11) is pivoted out.

3. Withdrawable rack according Claim 2, characterized in that the slot (16) has two sections (18, 19) which are at an angle with respect to one another, of which the first section (18), which is adjacent to the pivot bearing, is dimensioned to be relatively short and has a direction which, when the slotted lever (10, 11) is actuated, causes the guide pin (20) of the control lever (7, 8) to be acted on by a force emanating from the pivot bearing (39).

4. Withdrawable rack according to one of the preceding claims, characterized in that the pivot arm (14) of the slotted lever (10, 11) has an arcuate contour for the purpose of low-friction engagement into a transport opening (15) of the protective plate (5, 6).

5. Withdrawable rack according to one of the preceding claims, characterized in that, for the simultaneous movement in opposite directions of two protective plates (5, 6), provision is made of two slotted levers (10, 11) which are arranged in a mirror-inverted manner such that their pivot bearings (39) lie close together, and in that provision is made, likewise in a mirror-inverted arrangement, of two control levers (7, 8) whose ends which are opposite to the guide pin (20) are connected to one another by a link pin (27), the switching device acting on both control levers (7, 8) by means of the link pin (27).

6. Withdrawable rack according to Claim 5, characterized in that the slotted levers (10, 11) each have an extension arm (22), and in that the extension arms (22) cross over one another like shears in the quiescent state, leaving an interspace free in the process, such that it is possible to insert a lockable detent lug (23).

7. Withdrawable rack according to Claim 6, characterized in that the detent lug (23) is fitted on a travelling rail (3) for the switching device, which rail is arranged extendably on the withdrawable rack (1).

8. Withdrawable rack according to Claim 5 or one of the following claims, characterized in that the two slotted levers (10, 11) are designed to be identical and can be mounted having been rotated through 180°, the pivot bearing (39) being formed by pins (12), protruding at both sides, of the slotted levers (10, 11) and by corresponding half-shell-like step bearings (32) on the withdrawable rack (1).

9. Withdrawable rack according to Claim 8, characterized in that the pins (12) of each slotted lever (10, 11) are arranged on a tongue (13) which is of integral construction with the slotted lever (10, 11) but can be resiliently deflected relative to the latter, and in that the step bearings (32) are arranged on the withdrawable rack (1) in such a way that the two pins (12) are gripped at opposite sides.

10. Withdrawable rack according to Claim 5 or one of the following claims, characterized in that the restoring spring (31) is designed as a helical tension spring which prestresses the two control levers (7, 8) with respect to one another, and in that the slotted levers (10, 11) are prestressed with respect to one another into the quiescent position by means of a further helical tension spring (25), the two springs (25, 31) being arranged approximately parallel to one another.

## Revendications

1. Cadre (1) de rack pour un appareil de commutation disposé à déplacement et pourvu d'un système de contacts de coupure et d'un dispositif de protection, pouvant être actionné par un mouvement de translation de l'appareil de commutation pour protéger du toucher les pièces sous tension du système de contacts de coupure, le dispositif de protection comportant un système (7, 8; 10, 11) de leviers à solliciter par l'appareil de commutation, ainsi qu'une plaque (5, 6) protectrice isolante, pouvant être déplacée par le système (7, 8 ; 10, 11) de leviers,
**caractérisé** par les caractéristiques suivantes :
- le système (7, 8; 10, 11) de leviers comprend deux leviers mutuellement reliés en articulation, dont l'un est réalisé sous forme de levier (10, 11) à coulisse et possède une ouverture (16) de coulisse pour l'engagement d'un tenon (20) de guidage de l'autre levier, qui est réalisé sous forme de levier (7, 8) de commande à solliciter par l'appareil de commutation,
- le levier (10, 11) à coulisse est mobile autour d'un palier (39) de pivotement monté sur le cadre (1) de rack et porte, à son extrémité opposée au palier (39) de pivotement, un bras (14) pivotant pour la plaque (5, 6) protectrice,
- le levier (7, 8) de commande est, par un ressort (31) de rappel, précontraint par rapport au levier (10, 11) à coulisse de telle sorte qu'à l'état de repos et pendant l'ouverture de la plaque (5, 6) protectrice, le tenon (20) de guidage du levier (7, 8) de commande se trouve proche du palier (39) de pivotement du levier (10, 11) à coulisse, et qu'après un actionnement de la plaque (5, 6) protectrice, le tenon (20) de guidage du levier (7, 8) de commande peut, sans pivotement supplémentaire du levier (10, 11) à coulisse, être déplacé le long de l'ouverture (16) de coulisse à l'encontre de l'action du ressort (31) de rappel.

2. Cadre de rack suivant la revendication 1, **caractérisé** en ce que l'ouverture (16) de coulisse est disposée, par rapport au palier (39) de pivotement du levier (10, 11) à coulisse et au levier (7, 8) de commande, de telle sorte qu'à l'état de repos, le tenon (20) de guidage du levier (7, 8) de commande exerce une force dirigée vers le palier (39) de pivotement du levier à coulisse tandis qu'à la suite du pivotement du levier (10, 11) à coulisse vers l'extérieur, la force exercée tend à éloigner du palier (39) de pivotement.

3. Cadre de rack suivant la revendication 2, **caractérisé** en ce que l'ouverture (16) de coulisse comporte deux parties (18, 19) faisant un angle entre elles, dont la première partie (18), voisine du palier de pivotement, est prévue relativement courte et possède une direction qui produit, lorsque le levier (10, 11) à coulisse est actionné, l'application sur le tenon (20) de guidage du levier (7, 8) de commande d'une force tendant à éloigner du palier (39) de pivotement.

4. Cadre de rack suivant l'une des revendications précédentes, **caractérisé** en ce que le bras (14) pivotant du levier (10, 11) à coulisse possède un contour cintré afin de s'engager avec peu de frottement dans une ouverture (15) de transport de la plaque (5, 6) protectrice.

5. Cadre de rack suivant l'une des revendications précédentes, **caractérisé** en ce que, pour le déplacement simultané de deux plaques (5, 6) protectrices en sens contraires, il est prévu deux leviers (10, 11) à coulisse symétriquement disposés de telle sorte que leurs paliers (39) de pivotement sont proches l'un de l'autre, et en ce qu'il est prévu, également en disposition symétrique, deux leviers (7, 8) de commande, dont les extrémités opposées aux tenons (20) de guidage sont mutuellement reliées par un tenon (27) d'articulation, l'appareil de commutation agissant au moyen du tenon (27) d'articulation sur les deux leviers (7, 8) de commande.

6. Cadre de rack suivant la revendication 5, **caractérisé** en ce que les leviers (10, 11) à coulisse possèdent chacun une partie (22) saillante, et en ce que les parties (22) saillantes, à l'état de repos, se croisent à la manière de cisailles, en laissant un espace intermédiaire, de telle sorte qu'on peut y insérer un bec (23) de blocage, qui peut être verrouillé.

7. Cadre de rack suivant la revendication 6, **caractérisé** en ce que le bec (23) de blocage est monté sur un rail (3) de translation pour l'appareil de commutation, disposé à coulissement sur le cadre (1) de rack.

8. Cadre de rack suivant la revendication 5 ou l'une des revendications suivantes, **caractérisé** en ce que les deux leviers (10, 11) à coulisse sont de réalisation identique et peuvent être montés en étant tournés à 180°, le palier (39) de pivotement étant formé par des tourillons (12) faisant saillie de part et d'autre des leviers (10, 11) à coulisse, et par des cuvettes (32) de palier correspondantes sur le cadre (1) de rack, du genre demi-coques.

9. Cadre de rack suivant la revendication 8, **caractérisé** en ce que les tourillons (12) de chaque levier (10, 11) à coulisse sont disposés sur une languette (13) formée d'un seul tenant avec le levier (10, 11) à coulisse, mais pouvant être élastiquement déviée par rapport à ce dernier, et en ce que les cuvettes (32) de palier sont disposées sur le cadre (1) de rack de telle sorte que les deux tourillons (12) sont pris sur des côtés opposés.

10. Cadre de rack suivant la revendication 5 ou l'une des revendications suivantes, **caractérisé** en ce que le ressort (31) de rappel est réalisé sous forme de ressort de traction à boudin précontraignant les deux leviers (7, 8) de commande l'un vers l'autre, et en ce que les leviers (10, 11) à coulisse sont, dans la position de repos, précontraints l'un vers l'autre par un autre ressort (25) de traction à boudin, les deux ressorts (25, 31) étant disposés approximativement parallèlement entre eux.
